# FASCICULE DE BREVET EUROPEEN

(11) **EP 1 292 535 B1**
(45) Date de publication et mention de la délivrance du brevet: **29.03.2006**
(21) Numéro de dépôt: 01938359.5
(22) Date de dépôt: 29.05.2001
(51) Int. Cl.: C01B 33/027

(54) **POUDRE DE SILICIUM POUR LA PREPARATION DES ALKYL- OU ARYL-HALOGENOSILANES**
SILIZIUMPULVER FÜR DIE HERSTELLUNG VON ALKYL- ODER ARYL-HALOGENSILANEN
SILICON POWDER FOR PREPARING ALKYL- OR ARYL-HALOGENOSILANES

(30) Priorité: 30.05.2000 FR 0006920
(43) Date de publication de la demande: 19.03.2003
(73) Titulaire: Rhodia Silicones SAS, 69457 Lyon Cedex 06 (FR)
(72) Inventeur: MARGARIA, Thomas, F-74190 Passy (FR)
(74) Mandataire: Trolliet, Maurice
(86) Numéro de dépôt international: PCT/FR2001/001647
(87) Numéro de publication internationale: WO 2001/092153

(56) Documents cités:
- EP-A- 0 191 502
- EP-A- 0 893 408
- US-A- 5 346 141
- US-A- 5 728 858
- PATENT ABSTRACTS OF JAPAN vol. 007, no. 263 (C-196), 24 novembre 1983 (1983-11-24) & JP 58 145611 A (SHINETSU KAGAKU KOGYO KK), 30 août 1983 (1983-08-30)
- PATENT ABSTRACTS OF JAPAN vol. 1997, no. 10, 31 octobre 1997 (1997-10-31) & JP 09 141204 A (TORAY DOW CORNING SILICONE CO LTD), 3 juin 1997 (1997-06-03)

## Description

### Domaine de l'invention

L'invention concerne une poudre de silicium ou d'alliage de silicium, de granulométrie inférieure à 350 µm, spécialement adaptée à la fabrication des alkyl- ou aryl-halogénosilanes, destinés à la synthèse des silicones.

### Etat de la technique

La synthèse des alkyl- ou aryl-halogénosilanes par réaction entre 250 et 350°C d'un hydrocarbure halogéné, par exemple le chlorure de méthyl, sur le silicium est connue depuis le brevet US 2380995 délivré en 1945 à E.G. ROCHOW.

Cette réaction a atteint un développement industriel important pour la fabrication des silicones ; elle se pratiqùe souvent dans des réacteurs à lit fluidisé avec du silicium en poudre, le plus souvent dans des granulométries inférieures à 350 µm. Il est habituel, depuis de nombreuses années, d'utiliser une fraction granulométrique comprise entre environ 50 et 350 µm, la présence de particules de silicium de taille inférieure à 50 µm dans la poudre étant une cause de perte de matière et de baisse de rendement des réacteurs. A titre d'illustration de l'utilisation d'une telle coupe granulométrique, on peut citer par exemple le brevet EP 0191502 d'Union Carbide, déposé en 1986, qui préconise une coupe entre 48 mesh (300 µm) et 325 mesh (45 µm), ou la demande EP 0893408 de Pechiney Electrométallurgie, déposée en 1998, qui indique, aux exemples 1 et 2, une coupe 50-350 µm.

### Objet de l'invention

L'invention a pour objet une poudre de silicium ou d'alliage de silicium pour la fabrication des alkyl- ou aryl-halogénosilanes, de granulométrie inférieure à 350 µm, comportant une fraction massique de particules de taille inférieure à 5 µm de moins de 3%, et de préférence de moins de 2%.

### Description de l'invention

L'invention repose sur la constatation, par la demanderesse, de la présence dans les poudres de silicium tamisées pour obtenir une coupe granulométrique de l'ordre de 50-350 µm, de quantités non négligeables de particules de taille inférieure à 5 µm.

De manière inattendue, l'expérience montre que le tamisage d'une poudre pour en extraire la fraction inférieure à 50 µm, s'avère peu performant pour en éliminer les particules les plus fines, par exemple la fraction inférieure à 5 µm. Ces particules très fines sont probablement générées lors du conditionnement du produit et l'observation de la poudre au microscope en confirme l'existence.

L'évaluation de leur quantité relative en masse peut être déterminée par granulométrie laser ; on trouve toujours dans les poudres de silicium, quel que soit leur mode de préparation, des fractions massiques de particules de taille inférieure à 5 µm de l'ordre d'au moins 4%. La demanderesse a constaté également que la suppression ou la réduction de la teneur de ces particules très fines permettait d'améliorer le rendement de la réaction de Rochow. L'invention consiste donc, dans le but d'utiliser le plus efficacement possible la masse de contact à base de poudre de silicium, qui représente une part importante du coût d'élaboration des halogénosilanes, à ramener la teneur en particules de taille inférieure à 5 µm à moins de 3%, et de préférence à moins de 2%.

Pour obtenir ce résultat, on peut utiliser un lavage à l'eau de la poudre broyée à moins de 350 µm, et éventuellement tamisée pour obtenir une coupe granulométrique 50-350 µm. Ce lavage est suivi d'une décantation sélective, puis d'un séchage de la poudre décantée avec accessoirement tirage au vide pour faciliter le départ de l'eau. Cette technique permet une coupe granulométrique stricte à 5 µm, le dosage in fine de la fraction résiduelle de taille inférieure à 5 µm pouvant atteindre 0,5%.

On peut utiliser également, pour l'élimination sélective des particules les plus fines, la dispersion de la poudre dans un courant de gaz à vitesse modérée. On choisit la vitesse du gaz en fonction du seuil de coupure souhaité, en travaillant dans tous les cas en régime laminaire. Pour le gaz, il est préférable de choisir de l'air appauvri en oxygène pour des raisons de sécurité.

### Exemples

### Exemple 1

On a préparé au four électrique à arc un silicium métallurgique de qualité chimique correspondant aux spécifications requises pour l'application halogénosilanes. L'alliage a été coulé, solidifié, puis broyé à une granulométrie inférieure à 350 µm. On a prélevé cinq échantillons d'un kg de produit.

Ce type de poudre est habituellement testé sur un appareil conçu pour en évaluer les performances. Pour ce faire, on mélange 40 g de la poudre avec un catalyseur , et l'on place le mélange dans un réacteur en verre de diamètre 30 mm muni d'un agitateur. On envoie un courant de CH₃Cl gazeux au travers d'un disque en verre fritté supportant la poudre. Le débit de gaz est maintenu constant à 3,6 10⁻³ m³/h. Après chauffage du milieu réactionnel et démarrage de la réaction, le système est maintenu à 300°C. Après 12 h de réaction, on note le débit moyen obtenu en diméthyldichlorosilane, ainsi que le taux de ce produit dans l'ensemble des produits de la réaction.

Pour l'évaluation de la qualité granulométrique de la poudre de l'échantillon n° 1, deux types de mesure ont été effectués :
- une granulométrie laser;
- un test simplifié par rapport à l'essai décrit plus haut en opérant directement sur la poudre à tester sans ajout de catalyseur, à la température ambiante, sans chauffage, et en remplaçant le gaz CH₃Cl par de l'azote.

La granulométrie laser a détecté 5,5 % (en poids) de fines de taille inférieure à 5 µm. Au test simplifié, après 12h de traitement, le produit restant dans le réacteur a été récupéré et pesé. Sur les 40 g de produit de départ, il ne restait que 37,2 g, soit une perte de 7%.

### Exemple 2

L'échantillon N°2 préparé au début de l'exemple 1 a été tamisé à 50 µm pour en extraire la fraction granulométrique 0-50 µm. Sur l'échantillon ainsi tamisé, on a effectué une mesure de granulométrie laser, et trouvé 4,5% de fines de taille inférieure à 5 µm. On a prélevé 40 g de poudre pour effectuer le test simplifié décrit à l'exemple 1. Après 12h de traitement, le produit restant dans le réacteur a été récupéré et pesé. Sur les 40 g de produit de départ, il ne restait que 37,8 g, soit une perte de 5,5%.

### Exemple 3

L'échantillon n° 3, de granulométrie inférieure à 350 µm, préparé au début de l'exemple 1, a été lavé dans 10 litres d'eau .On a ensuite laissé décanter le mélange obtenu pendant une heure, puis la liqueur surnageante a été éliminée et la poudre décantée récupérée et séchée sous lampe infrarouge sous vide. Sur la poudre ainsi lavée, on a effectué une mesure de granulométrie laser, et trouvé 0,5% de fines de taille inférieure à 5 µm

Sur cet échantillon n° 3 lavé, on a prélevé 40 g de poudre pour effectuer le test simplifié décrit à l'exemple 1. Après 12h de traitement, le produit restant dans le réacteur a été récupéré et pesé. Sur les 40 g de produit de départ, il ne restait que 39,7 g, soit une perte de 0,75%.

### Exemple 4

L'échantillon n° 4 préparé au début de l'exemple 1 a été dispersé par jetées régulières à la cadence de 10 g par minute au sommet d'un tube de diamètre 50 mm et de hauteur 500 mm, parcouru par un courant de gaz ascendant constitué d'un volume d'air et de deux volumes d'azote, dont le débit était réglé à 60 cm³ par seconde.

On a constaté le départ au sommet du tube d'une poussière fine entraînée avec le gaz. Sur la poudre récupérée au pied du tube, on a effectué une mesure de granulométrie laser et trouvé 2% de fines de taille inférieure à 5 µm.

Sur cet échantillon n° 4, on a prélevé 40 g de poudre pour effectuer le test simplifié décrit à l'exemple 1. Après 12h de traitement, le produit restant dans le réacteur a été récupéré et pesé. Sur les 40 g de produit de départ, il en restait 39,0 g, soit une perte de 2,5%.

### Exemple 5

L'échantillon n° 5 a été tamisé à 50 µm pour préparer une poudre de fraction granulométrique 50 - 350 µm, qui a ensuite été utilisée pour refaire l'opération décrite à l'exemple 4.

Sur la poudre récupérée au pied du tube, on a effectué une mesure de granulométrie laser et trouvé 1 % de fines de taille inférieure à 5 µm. Sur cet échantillon n° 5 ainsi traité, on a prélevé 40 g de poudre pour effectuer le test simplifié décrit à l'exemple 1. Après 12h de traitement, le produit restant dans le réacteur a été récupéré et pesé. Sur les 40 g de produit de départ, il en restait 39,4 g, soit une perte de 1,5%.

## Revendications

1. Poudre de silicium ou d'alliage de silicium destinée à la fabrication des alkyl- ou aryl-halogénosilanes d'une granulométrie inférieure à 350 µm, **caractérisée par** une fraction massique de particules de taille inférieure à 5 µm de moins de 3 %.

2. Poudre de silicium selon la revendication 1, **caractérisée par** une fraction massique de particules de taille inférieure à 5 µm de moins de 2%.

3. Procédé de fabrication d'une poudre selon l'une des revendications 1 ou 2, comportant un broyage de la poudre à une granulométrie inférieure à 350 µm, un lavage à l'eau, une décantation et un séchage.

4. Procédé de fabrication d'une poudre selon la revendication 3, **caractérisée en ce que** la poudre broyée à moins de 350 µm est tamisée à 50 µm pour obtenir une coupe granulométrique 50 -350 µm.

5. Procédé de fabrication d'une poudre selon l'une des revendications 1 ou 2, comportant un broyage de la poudre à une granulométrie inférieure à 350 µm, un tamisage pour obtenir une coupe granulométrique 50-350 µm et une dispersion de cette poudre dans un courant de gaz en régime laminaire.

6. Procédé selon la revendication 5, **caractérisé en ce que** le gaz est de l'air appauvri en oxygène.

7. Procédé de fabrication des alkyl- ou aryl-halogénosilanes par réaction, à une température comprise entre 250 et 350°C, d'un hydrocarbure halogéné avec une poudre de silicium ou d'alliage de silicium d'une granulométrie inférieure à 350 µm, **caractérisée en ce que** la poudre de silicium ou d'alliage de silicium possède une fraction massique de particules de taille inférieure à 5 µm de moins de 3 %.

8. Procédé selon la revendication 7, **caractérisé en ce que** la fraction massique de particules de taille inférieure à 5 µm est de moins de 2%.

9. Procédé selon l'une des revendications 7 ou 8, **caractérisé en ce que** la poudre de silicium ou d'alliage de silicium est obtenue par un procédé comportant un broyage de la poudre à une granulométrie inférieure à 350 µm, un lavage à l'eau, une décantation et un séchage.

10. Procédé selon la revendication 9, **caractérisé en ce que** la poudre broyée à moins de 350 µm est tamisée à 50 µm pour obtenir une coupe granulométrique 50 -350 µm.

11. Procédé selon l'une des revendications 7 ou 8, **caractérisé en ce que** la poudre de silicium ou d'alliage de silicium est obtenue par un procédé comportant un broyage de la poudre à une granulométrie inférieure à 350 µm, un tamisage pour obtenir une coupe granulométrique 50-350 µm et une dispersion de cette poudre dans un courant de gaz en régime laminaire.

12. Procédé selon la revendication 11, **caractérisé en ce que** le gaz est de l'air appauvri en oxygène.

## Patentansprüche

1. Pulver von Silicium oder von Siliciumlegierung, vorgesehen für die Herstellung von Alkyl- oder Aryl-halogensilanen, mit einer Granulometrie von unter 350 µm, **gekennzeichnet durch** eine Massefraktion der Teilchen mit einer Größe von unter 5 µm von weniger als 3 %.

2. Siliciumpulver nach Anspruch 1, **gekennzeichnet durch** eine Massefraktion der Teilchen mit einer Größe von unter 5 µm von weniger als 2 %.

3. Verfahren zur Herstellung eines Pulvers nach einem der Ansprüche 1 oder 2, umfassend eine Zerkleinerung des Pulvers auf eine Granulometrie von unter 350 µm, ein Waschen mit Wasser, eine Dekantierung und eine Trocknung.

4. Verfahren zur Herstellung eines Pulvers nach Anspruch 3, **dadurch gekennzeichnet, daß** das auf weniger als 350 µm zerkleinerte Pulver auf 50 µm gesiebt wird, um einen granulometrischen Schnitt von 50 µm bis 350 µm zu erhalten.

5. Verfahren zur Herstellung eines Pulvers nach einem der Ansprüche 1 oder 2, umfassend eine Zerkleinerung des Pulvers auf eine Granulometrie von unter 350 µm, ein Sieben, um einen granulometrischen Schnitt von 50 µm bis 350 µm zu erhalten, und eine Dispersion dieses Pulvers in einem Gasstrom im laminaren Regime.

6. Verfahren nach Anspruch 5, **dadurch gekennzeichnet, daß** das Gas an Sauerstoff abgereicherte Luft ist.

7. Verfahren zur Herstellung von Alkyl- oder Aryl-halogensilanen durch Reaktion eines halogenierten Kohlenwasserstoffes mit einem Pulver von Silicium oder von Siliciumlegierung mit einer Granulometrie von unter 350 µm bei einer Temperatur zwischen einschließlich 250 °C und 350 °C, **dadurch gekennzeichnet, daß** das Pulver von Silicium oder von Siliciumlegierung eine Massefraktion der Teilchen mit einer Größe von unter 5 µm von weniger als 3 % besitzt.

8. Verfahren nach Anspruch 7, **dadurch gekennzeichnet, daß** die Massefraktion der Teilchen mit einer Größe von unter 5 µm weniger als 2 % ausmacht.

9. Verfahren nach einem der Ansprüche 7 oder 8, **dadurch gekennzeichnet, daß** das Pulver von Silicium oder von Siliciumlegierung durch ein Verfahren erhalten wird, das eine Zerkleinerung des Pulvers auf eine Granulometrie von unter 350 µm, ein Waschen mit Wasser, eine Dekantierung und eine Trocknung umfaßt.

10. Verfahren nach Anspruch 9, **dadurch gekennzeichnet, daß** das auf weniger als 350 µm zerkleinerte Pulver auf 50 µm gesiebt wird, um einen granulometrischen Schnitt von 50 µm bis 350 µm zu erhalten.

11. Verfahren nach einem der Ansprüche 7 oder 8, **dadurch gekennzeichnet, daß** das Pulver von Silicium oder von Siliciumlegierung durch ein Verfahren erhalten wird, das eine Zerkleinerung des Pulvers auf eine Granulometrie von unter 350 µm, ein Sieben, um einen granulometrischen Schnitt von 50 µm bis 350 µm zu erhalten, und eine Dispersion dieses Pulvers in einem Gasstrom im laminaren Regime umfaßt.

12. Verfahren nach Anspruch 11, **dadurch gekennzeichnet, daß** das Gas an Sauerstoff abgereicherte Luft ist.

## Claims

1. Silicon or silicon alloy powder intended for the manufacture of alkyl- or arylhalosilanes with a particle size of less than 350 µm, **characterized by** a fraction by weight of particles with a size of less than 5 µm of less than 3%.

2. Silicon powder according to Claim 1, **characterized by** a fraction by weight of particles with a size of less than 5 µm of less than 2%.

3. Process for the manufacture of a powder according to either of Claims 1 and 2, which comprises grinding the powder to a particle size of less than 350 µm, washing with water, separating by settling and drying.

4. Process for the manufacture of a powder according to Claim 3, **characterized in that** the powder ground to less than 350 µm is sieved at 50 µm in order to obtain a particle size fraction of 50-350 µm.

5. Process for the manufacture of a powder according to either of Claims 1 and 2, which comprises grinding the powder to a particle size of less than 350 µm, sieving, in order to obtain a particle size fraction of 50-350 µm, and dispersing this powder in a stream of gas under laminar conditions.

6. Process according to Claim 5, **characterized in that** the gas is air depleted in oxygen.

7. Process for the manufacture of alkyl- or arylhalosilanes by reaction, at a temperature of between 250 and 350°C, of a halogenated hydrocarbon with a silicon or silicon alloy powder with a particle size of less than 350 µm, **characterized in that** the silicon or silicon alloy powder has a fraction by weight of particles with a size of less than 5 µm of less than 3%.

8. Process according to Claim 7, **characterized in that** the fraction by weight of particles with a size of less than 5 µm is less than 2%.

9. Process according to either of Claims 7 and 8, **characterized in that** the silicon or silicon alloy powder is obtained by a process which comprises grinding the powder to a particle size of less than 350 µm, washing with water, separating by settling and drying.

10. Process according to Claim 9, **characterized in that** the powder ground to less than 350 µm is sieved at 50 µm in order to obtain a particle size fraction of 50-350 µm.

11. Process according to either of Claims 7 and 8, **characterized in that** the silicon or silicon alloy powder is obtained by a process which comprises grinding the powder to a particle size of less than 350 µm, sieving, in order to obtain a particle size fraction of 50-350 µm, and dispersing this powder in a stream of gas under laminar conditions.

12. Process according to Claim 11, **characterized in that** the gas is air depleted in oxygen.
